# FASCICULE DE BREVET EUROPEEN

(11) **EP 4 031 367 B1**
(45) Date de publication et mention de la délivrance du brevet: **08.11.2023**
(21) Numéro de dépôt: 20771587.1
(22) Date de dépôt: 18.09.2020
(51) Int. Cl.: B32B 17/10, B32B 3/26, G01S 17/00, G01S 7/481, G01S 17/931

(54) **VITRAGE FEUILLETE DE VEHICULE ET DISPOSITIF AVEC SYSTEME DE VISION PROCHE INFRAROUGE ASSOCIE**
FAHRZEUG-VERBUNDVERGLASUNG UND ZUGEHÖRIGE VORRICHTUNG MIT NAHINFRAROTBEOBACHTUNGSSYSTEM
LAMINATED VEHICLE GLAZING AND RELATED APPARATUS WITH NEAR INFRARED VISION SYSTEM

(30) Priorité: 20.09.2019 FR 1910385
(43) Date de publication de la demande: 27.07.2022
(73) Titulaire: Saint-Gobain Glass France, 92400 Courbevoie (FR)
(72) Inventeur: YAVARI, Keihann, 60280 MARGNY-LES-COMPIEGNE (FR); DAVIS, Claire, 60200 COMPIEGNE (FR); GIRARD, Pauline, 60200 COMPIEGNE (FR)
(74) Mandataire: Saint-Gobain Recherche
(86) Numéro de dépôt international: PCT/EP2020/076099
(87) Numéro de publication internationale: WO 2021/053138

(56) Documents cités:
- EP-A1- 1 464 632
- WO-A1-2018/178286
- JP-A- 2006 327 381

## Description

L'invention se rapporte à un vitrage feuilleté, en particulier un pare-brise, dans un véhicule notamment routier, de train en association avec un système de vision dans le proche infrarouge. L'invention décrit également un dispositif combinant ledit vitrage et le système de vision.

Les vitrages pour véhicules autonomes et la technologie associée évoluent constamment, notamment pour améliorer la sécurité.

La télédétection par laser ou LIDAR, acronyme de l'expression en langue anglaise « light détection and ranging » ou « laser détection and ranging » (soit en français « détection et estimation de la distance par la lumière » ou « par laser ») est utilisable dans des véhicules autonomes au niveau des phares.

Plus récemment la demande de brevet WO20180153012 propose de placer un LIDAR fonctionnant dans le proche infrarouge entre 750nm et 1050nm derrière le pare-brise feuilleté comportant deux feuilles de verre extraclair et un filtre infrarouge.

Les performances de ce dispositif de vision (vitrage associé au LIDAR) peuvent être améliorées. WO2018/178286 divulgue un vitrage de véhicule comportant une première feuille de verre destinée à être le vitrage extérieur; un intercalaire de feuilletage en matière polymère; une deuxième feuille de verre destinée à être le vitrage intérieur, caractérisé en ce que au moins une feuille de verre présente une teneur pondérale en oxyde de fer total de 0.002-0,06 et le vitrage comporte un revêtement antireflet.

Plus largement l'invention vise aussi un dispositif avec un système de vision dans l'infrarouge et dans le visible soit multi spectral.

Plus précisément, la présente invention se rapporte à un vitrage feuilleté (et/ou bombé) de véhicule notamment routier (voiture, camion, transport en commun : bus, car etc) ou ferroviaire (en particulier à vitesse maximale d'au plus 90km/h ou d'au plus 70km/h, en particulier les métros, tramway), notamment bombé, en particulier un pare-brise, ou encore une lunette arrière, voire un vitrage latéral, d'épaisseur E1 donnée par exemple subcentimétrique notamment d'au plus 5mm pour un pare-brise de véhicule routier, vitrage comportant :
- un première feuille de verre, notamment bombée, destinée à être le vitrage extérieur, avec une première face principale externe F1 et une deuxième face principale interne F2 orientée vers l'habitacle, si véhicule automobile d'épaisseur de préférence d'au plus 4mm, et même d'au plus 3mm ou 2,5mm, - notamment 2,1mm, 1,9mm, 1,8mm, 1,6mm et 1,4mm- et de préférence d'au moins 0,7mm ou 1mm
- un intercalaire de feuilletage (mono ou multifeuillet), éventuellement neutre, clair, extraclair ou teinté notamment gris ou vert, en matière polymère de préférence thermoplastique et mieux encore en polyvinylbutyral (PVB), de préférence si véhicule routier d'épaisseur d'au plus 1,8mm, mieux d'au plus 1,2mm et même d'au plus 0,9mm (et mieux d'au moins 0,3mm et même d'au moins 0,6mm), l'intercalaire de feuilletage étant éventuellement acoustique et/ou ayant éventuellement une section transversale diminuant en forme en coin du haut vers le bas du vitrage feuilleté (en particulier un parebrise) pour un affichage tête haute (HUD pour Head Up Display en anglais), intercalaire de feuilletage avec une face principale Fa orienté vers F2 et avec une face principale Fb opposée à Fa
- une deuxième feuille de verre destinée à être le vitrage intérieur, de préférence bombée et en particulier teintée, avec une troisième face principale F3 coté F2 et une quatrième face principale F4 interne orienté vers l'habitacle, si véhicule routier d'épaisseur de préférence inférieure à celle du premier vitrage, même d'au plus 3mm ou 2mm - notamment 1,9mm, 1,8mm, 1,6mm et 1,4mm- ou même d'au plus 1,3mm, et de préférence d'au moins 0,7mm, l'épaisseur des première et deuxième feuilles de verres étant de préférence strictement inférieure à 5 ou 4mm, même à 3,7mm.

La première feuille de verre comporte, sur la face F2, un revêtement antireflet, de préférence local, à au moins une longueur d'onde dite de travail dans l'infrarouge dans une gamme allant de 800nm à 1800nm, en particulier entre 850nm et 1600nm avec une surface libre (non recouverte par l'intercalaire de feuilletage et la deuxième feuille de verre) au moyen d'un trou traversant dans l'épaisseur de l'intercalaire et dans l'épaisseur de la deuxième feuille de verre.

La première feuille de verre notamment à base de silice, sodocalcique, silicosodo calcique (de préférence), ou aluminosilicate, ou borosilicate, présente une teneur pondérale en oxyde de fer total (exprimé sous la forme Fe₂O₃) d'au plus 0,05% (500ppm), de préférence d'au plus 0,03% (300ppm) et d'au plus 0,015% (150ppm) et notamment supérieure ou égale à 0,005%.

La deuxième feuille de verre notamment à base de silice, sodocalcique, de préférence silicosodo calcique (et comme la première feuille de verre), voire aluminosilicate, ou borosilicate présente une teneur pondérale en oxyde de fer total (exprimé sous la forme Fe₂O₃) d'au moins 0,4% et de préférence d'au plus 1,5%.

Ainsi selon l'invention, pour atteindre un niveau élevé de transmission on sélectionne :
1) un verre extérieur extraclair dans le proche infrarouge visé,
2) un verre intérieur plus absorbant dans le proche infrarouge visé et nécessairement évidé
3) un intercalaire de feuilletage évidé pour pouvoir tirer parti d'un revêtement anti-reflet sur la face F2 dans le proche infrarouge visé.

Cette solution est plus performante que celle de l'art antérieur basée sur deux verres extraclairs pleins.

En outre en évitant l'usage d'un deuxième verre extraclair, elle améliore le confort (chaleur dans le véhicule), l'esthétique et est plus économique.

L'invention convient tout particulièrement pour les vitrages (parebrise, lunette etc) aux véhicules autonomes ou semi autonomes : niveau L2+, L3, L4 et L5 (« full » autonome) ainsi que les véhicules type Robot Taxi et navette (Shuttle) etc.

L'oxyde de fer, présent comme impureté dans la plupart des matières premières naturelles utilisées en verrerie (sable, feldspath, calcaire, dolomie...), absorbe à la fois dans le domaine du visible et proche ultraviolet (absorption due à l'ion ferrique Fe³⁺) et surtout dans le domaine du visible et proche infrarouge (absorption due à l'ion ferreux Fe²⁺) c'est pourquoi on réduit l'oxyde de fer dans la première feuille de verre.

Dans la deuxième feuille de verre, on peut donc choisir une teneur en oxyde de fer plus élevée.

Avantageusement, l'ensemble première feuille de verre avec ledit revêtement antireflet présente :
- une transmission totale d'au moins 90,0%, 91,0%, ou même 92,0% ou 92,3% à la longueur d'onde de travail notamment 905±5nm et/ou 1550±5nm mesurée à la normale (90°) ou même de préférence aussi à 60° ou même jusqu'à 60° par rapport au plan (local) de la première feuille par exemple côté face F2 et/ou côté face F1
- et/ou le revêtement antireflet augmente d'au moins 1%, 2% ou 2,5% ou même 3,0% à la longueur d'onde de travail la transmission totale de la première feuille de verre mesuré à la normale (90°) ou même de préférence aussi à 60° et même jusqu'à 60° par rapport au plan (local) de la première feuille par exemple côté face F2 et/ou côté face F1.

L'angle du vitrage notamment un pare-brise de véhicule routier peut être typiquement entre 21° et 36° par rapport au sol et en moyenne de 30°. Aussi, une haute transmission à 60° est particulièrement avantageuse car c'est l'angle d'incidence du faisceau du LIDAR sur le parebrise si celui-ci est à 30° du sol.

La transmission dans l'infrarouge est mesurée par exemple avec un spectromètre Fourier tel que le BrukerVertex-70.

Naturellement si on utilise un système de vision multi spectral, on peut également souhaiter que l'ensemble première feuille de verre avec ledit revêtement antireflet présente :
- une transmission totale d'au moins 90%, 91%, ou même 92% à une autre longueur d'onde de travail dans le visible notamment entre 500nm et 600nm mesurée à la normale ou même de préférence de 90° jusqu'à 60° par rapport au plan de la première feuille, par exemple côté face F2 et/ou côté face F1
- et/ou le revêtement antireflet augmente d'au moins 1%, 2% ou 2,5% ou même 3% à la deuxième longueur d'onde de travail la transmission totale de la première feuille de verre mesurée à la normale ou même de préférence de 90° jusqu'à 60° par rapport au plan de la première feuille par exemple côté face F2 et/ou côté face F1.

Pour quantifier la transmission du verre dans le domaine du visible, on définit souvent un facteur de transmission lumineuse, appelée transmission lumineuse, souvent abrégée « T_{L} », calculé entre 380 et 780 nm et ramené à une épaisseur de verre de 3,2 mm ou 4 mm, selon la norme ISO 9050 :2003, en prenant donc en considération l'illuminant D65 tel que défini par la norme ISO/CIE 10526 et l'observateur de référence colorimétrique C.I.E. 1931 tel que défini par la norme ISO/CIE 10527.

Naturellement la transmission lumineuse T_{L} du vitrage feuilleté dans une zone sans trou (zone centrale du pare-brise) est de préférence d'au moins 70% ou 75%, 80% ou 85%, 88%.

La deuxième feuille de verre est notamment verte, bleue, grise. La deuxième feuille de verre peut être verte par le Fe₂O₃ ou encore bleue avec CoO et Se ou grise avec Se et CoO.

On peut citer notamment les verres de la Demanderesse dénommés TSAnx (0,5 à 0,6% de fer) TSA2+, TSA3+(0,8 à 0,9% de fer),TSA4+(1% de fer),TSA5+, par exemple verts. Le TSA3+ (2.1mm) a par exemple une transmission totale à 905mm d'environ 40% et à 1550mm d'environ 50%.

La deuxième feuille de verre peut présenter un rédox étant défini comme étant le rapport entre la teneur pondérale en FeO (fer ferreux) et la teneur pondérale en oxyde de fer total (exprimé sous la forme Fe₂O₃) entre 0,22 et 0,35 ou 0,30.

Ladite deuxième feuille de verre peut avoir une composition chimique qui comprend les constituants suivants en une teneur variant dans les limites pondérales ci-après définies :

| | |
|---|---|
| SiO₂ | 64 - 75 % |
| Al₂O₃ | 0 - 5 % |
| B₂O₃ | 0 - 5 %, |
| CaO | 2 - 15 % |
| MgO | 0 - 5 % |
| Na₂O | 9 - 18% |
| K₂O | 0 - 5 % |
| SO₃ | 0,1 -0,35% |
| Fe₂O₃ (fer total) | au moins 0,4% et même 0,4 à 1,5%, |
| Eventuellement Rédox | 0,22 - 0,3% |

Et notamment moins de 0,1% d'impuretés.

Le trou traversant est donc composé :
- d'un premier trou traversant dans l'intercalaire de feuilletage (mono ou multi feuillets) de largeur D1
- et d'un deuxième trou traversant dans la deuxième feuille de verre de largeur D2 Les premier et deuxième trous sont d'axe de symétrie confondu ou proche et de préférence de largeur identique (avant et même après feuilletage).

Le trou traversant (premier et deuxième trou) peut être :
- trou fermé (entouré par la paroi de la deuxième feuille de verre), donc au sein du vitrage notamment espacé de la tranche du vitrage la plus proche d'au moins 3cm ou 5cm
- ouvert ou débouchant, formant une encoche (périphérique).

Le trou traversant est de préférence dans une zone périphérique du vitrage feuilleté de préférence en bord longitudinal supérieur et/ou dans une région centrale périphérique et le revêtement antireflet est local et dans cette région périphérique.

Le trou traversant présente une forme donnée notamment de section droite convexe, par exemple trapézoïdale ou rectangulaire ou ronde ou ovale. Le revêtement antireflet peut présenter une forme homothétique.

On peut envisager si nécessaire plusieurs trous traversants (2, 3 trous) dans l'intercalaire et la deuxième feuille de verre de forme et/ou dimensions identiques par exemple côte à côte dans cette zone périphérique en particulier. La face F2 comporte alors un revêtement antireflet commun avec une surface libre dans tous les trous ou un revêtement antireflet (AR) local distinct pour chaque trou, et par exemple les revêtements AR locaux présentent des épaisseurs distinctes.

La forme et les dimensions du trou traversant sont configurées selon les techniques de l'art de manière à collecter efficacement et sélectivement l'ensemble des rayonnements traversant le vitrage (pare-brise, lunette etc), notamment dans le cas du LIDAR ceux réfléchis issu d'une plage d'angle solide extérieure au véhicule et provenant de la zone en avant du véhicule que l'on cherche à capturer via le LIDAR.

Par exemple le trou est de même forme que le système de vision infrarouge tel que le LIDAR.

Le trou (ouvert ou fermé) peut être notamment de section droite convexe en particulier trapézoïdale de préférence, ou encore circulaire ou ovale ou ellipsoïdale ou encore rectangulaire, carrée...

Si le trou est une encoche une partie de cette encoche sera masquée par le cadre du vitrage donc non fonctionnelle pour le système de vision. Si le trou est fermé est trop près du bord il est en de même.

Si le trou est fermé, le bord du trou le plus proche de la tranche du vitrage (bord longitudinal supérieure de préférence et notamment dans une zone centrale) est distant de cette tranche du vitrage (de la deuxième feuille) de préférence d'au moins 2cm ou 3cm et mieux 5cm.

Le trou peut être dans la zone centrale du bord longitudinale supérieur du pare-brise, zone usuelle du rétroviseur intérieur (adjacent au trou ou rétroviseur supprimé suivant les véhicules) zone où la couche de masquage en face F2 et/ou Fa est généralement plus épaisse que sur les zones latérales longeant le bord supérieur (passager, conducteur..).

De préférence, le trou présente une section, notamment trapézoïdale ou de type disque ou ovale, - de plus petite dimension d'au moins 5cm (adapté à la taille du système de vision infrarouge par exemple) - et de préférence de plus grande dimension (en particulier grand côté ou diamètre) d'au plus 40cm, 30cm, 25cm, 20cm (pour des aspects mécaniques) - et de préférence le revêtement antireflet occupe une surface englobant le trou et de longueur d'au plus 40cm ou 30cm.

En particulier la section est un quadrilatère, notamment rectangle ou un trapèze, avec :
- un premier (grand) coté ou bord longitudinal dit supérieur (le plus proche de la tranche du bord longitudinal supérieur du vitrage) de préférence parallèle à la tranche du bord longitudinal supérieur du vitrage et de longueur de préférence d'au plus 30cm, 20cm ou 15cm ou 12cm et notamment espacé d'au moins 5cm ou 6cm de la tranche (du bord longitudinal supérieur du vitrage)
- un deuxième (grand) coté ou bord longitudinal dit inférieur (le plus éloigné de la tranche du bord longitudinal supérieur du vitrage, plus proche de la zone centrale) de préférence parallèle à la tranche du bord longitudinal supérieur du vitrage et de longueur de préférence d'au plus 35cm ou 30cm ou 25cm ou 20cm et de préférence plus grande que celle du premier grand côté
- de hauteur (entre ces premier et deuxième grands côtés) de préférence d'au moins 5cm et même d'au plus 15cm.

Alternativement le trou traversant est le long d'un bord latéral.

Dans le cas d'une lunette arrière le trou traversant peut être périphérique le long d'un bord longitudinal (notamment supérieur) ou latéral.

Naturellement le trou traversant est un espace vide ou au moins qui n'est pas rempli (dans sa partie centrale) par une matière quelconque absorbante dans le proche infrarouge visé qui serait entre le revêtement antireflet et le système de vision infrarouge. Toutefois on peut prévoir un insert (fermé, ouvert) de type bague (monolithique ou en plusieurs morceaux disjoints ou reliés etc) notamment de largeur d'au plus 1,5cm par exemple en matière souple, polymère (polycarbonate, polyamide, polyoléfine, polypropylène etc) :
- monté sur (notamment collé ou en force) la paroi de la deuxième feuille de verre délimitant (en partie haute) le trou
- voire également en contact avec la paroi de l'intercalaire de feuilletage et même sur la face F2.

Cet insert peut s'étendre au-delà du trou, notamment sur la face F4.

Cet insert peur servir :
- pour placer dans le trou tout ou partie du système de vision infrarouge ou une optique intermédiaire entre le revêtement antireflet et le système de vision infrarouge
- pour placer dans le trou tout ou partie de moyens de fixation du système de vision infrarouge.

Si le trou de l'intercalaire est fait avant feuilletage et l'insert est placé avant le feuilletage au niveau de l'intercalaire (notamment au plus 150°C et sous pression notamment), cet insert pour servir pour éviter ou réduire le fluage de l'intercalaire sur la surface libre du revêtement antireflet.

Le revêtement antireflet notamment local peut dépasser de préférence d'au plus 100mm, 50mm, 30mm ou 20mm ou 10mm entre la face F2 et la face Fa.

Le revêtement antireflet peut comprendre un empilement de couches minces diélectriques (d'oxyde et/ou de nitrures de métal ou de silicium par exemple) alternant haut et bas indices de réfraction (à la longueur d'onde de travail).

Le revêtement antireflet comporte de préférence une couche (fonctionnelle) de silice poreuse de préférence sol gel.

Dans un premier mode de réalisation, les pores sont les interstices d'un empilement non compact des billes nanométriques, notamment de silice, cette couche étant décrite par exemple dans le document US20040258929.

Dans un deuxième mode de réalisation, la couche poreuse est obtenue par le dépôt d'un sol de silice condensé (oligomères de silice) et densifié par des vapeurs de type NH3, cette couche étant décrite par exemple dans le document WO2005049757.

Dans un troisième mode de réalisation, la couche poreuse peut aussi être de type sol gel telle que comme décrite dans le document EP1329433. La couche poreuse peut aussi être obtenue avec d'autres agents porogènes connus : des micelles de molécules tensioactives cationiques en solution et, éventuellement, sous forme hydrolysée, ou de tensioactifs anioniques, non ioniques, ou des molécules amphiphiles, par exemple des copolymères blocs.

Dans un quatrième mode de réalisation, la couche poreuse peut aussi être de type sol gel telle que comme décrite dans le document WO2008/059170. La couche poreuse peut ainsi être obtenue avec des agents porogènes qui sont de préférence des billes polymériques.

Le revêtement antireflet notamment de silice poreuse selon l'invention peut avoir une épaisseur avantageusement comprise entre 10 nm et 10 µm (ces valeurs limites étant incluses), en particulier 50 nm et 1 µm et encore plus préférentiellement entre 70 et 500nm.

La couche de silice poreuse peut présenter des pores fermés d'au moins 20nm, 50nm ou 80nm éventuellement la couche fonctionnelle peut comporter des pores avec une concentration augmentant en direction de la surface libre.

Les pores peuvent avoir une forme allongée, notamment en grain de riz. Encore plus préférentiellement, les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

La silice poreuse peut être dopée par exemple pour améliorer encore davantage sa tenue hydrolytique dans le cas d'applications où une bonne résistance est nécessaire (façades, extérieurs etc). Les éléments dopants peuvent de préférence être choisis parmi Al, Zr, B, Sn, Zn. Le dopant est introduit pour remplacer les atomes de Si dans un pourcentage molaire pouvant de préférence atteindre 10%, encore plus préférentiellement jusqu'à 5%.

Le revêtement antireflet peut comporter une sous couche de protection chimique notamment d'épaisseur d'au plus 200nm par exemple, notamment une couche de silice dense, par sol gel surmonté d'une couche fonctionnelle sol gel de silice poreuse.

La sous-couche peut être à base de silice ou de dérivés au moins partiellement oxydés du silicium choisi parmi le dioxyde de silicium, des oxydes de silicium sous stoechiométriques, l'oxycarbure, l'oxynitrure ou l'oxycarbonitrure de silicium.

La sous-couche s'avère utile quand la surface sous-jacente est en verre silicosodocalcique car elle joue le rôle de barrière aux alcalins.

Cette sous-couche comprend donc avantageusement Si, O, éventuellement du carbone et de l'azote. Mais elle peut comprendre aussi des matériaux minoritaires par rapport au silicium, par exemple des métaux comme Al, Zn ou Zr. La sous-couche peut être déposée par sol-gel ou par pyrolyse, notamment par pyrolyse en phase gazeuse (CVD). Cette dernière technique permet d'obtenir des couches en SiOₓC_{y} ou en SiO₂ assez aisément, notamment par dépôt directement sur le ruban de verre float dans le cas de substrats verriers. Mais on peut aussi effectuer le dépôt par une technique sous vide, par exemple par pulvérisation cathodique à partir d'une cible de Si (éventuellement dopée) ou d'une cible en sous-oxyde de silicium (en atmosphère réactive oxydante et/ou nitrurante par exemple). Cette sous-couche a de préférence une épaisseur d'au moins 5 nm, notamment une épaisseur comprise entre 10nm et 200 nm, par exemple entre 80nm et 120 nm.

Le revêtement antireflet peut aussi comporter une surcouche si elle n'altère pas les propriétés antireflet.

On peut aussi mettre un revêtement antireflet également en face F1 en regard de celui en face F2.

Le revêtement antireflet peut avoir la même forme que la section du trou par exemple trapézoïdale ou encore rectangulaire etc.

Bien que moins préféré à priori, le revêtement antireflet peut être uniquement dans une zone centrale en regard dudit trou traversant, il ne dépasse pas du trou traversant et même est espacé du bord du trou traversant de préférence d'au plus 1cm. Par exemple la surface libre dans le trou traversant présente une longueur et/ou un côté d'au moins 5cm, 10cm, 15cm et de préférence d'au plus 30cm.

Le vitrage peut comporter entre la face F2 et Fa, une couche de masquage opaque notamment un émail (noir etc) sur la face F2 et/ou sur la face Fa (en particulier sur Fa une encre notamment noire etc), en bordure du trou traversant entre la face F2 et Fa, en particulier en zone périphérique et même centrale et de préférence le long du bord longitudinal du vitrage, le revêtement antireflet (notamment la couche de silice poreuse ou une éventuelle sous couche de silice dense) étant en contact de la couche de masquage opaque.

La couche de masquage est par exemple en face F2 et le revêtement antireflet est sur la couche de masquage ou sous la couche de masquage et/ou la couche de masquage est sur la face Fa et le revêtement antireflet est en contact avec la couche de masquage. La couche de masquage présente une épargne au droit dudit trou traversant (au moins dans la zone centrale) et de préférence dépasse d'au plus 30mm ou 20mm ou 10mm ou 5mm dans le dit trou traversant et/ou laisse le revêtement antireflet avec la surface libre dans le trou, surface libre (non revêtue de couche de masquage) présentant une longueur d'au moins 5cm, 10cm, 15cm et de préférence d'au plus 30cm.

Cette couche de masquage va masquer le système de vision infrarouge et par exemple son boitier.

Une couche de masquage peut être une couche imprimée sur l'intercalaire de feuilletage par exemple sur le PVB.

Le revêtement antireflet (notamment la couche de silice poreuse ou une éventuelle sous couche de silice dense) peut être aussi espacé de la couche de masquage (par exemple qui est en face F2 notamment de l'émail) ou au moins ne la recouvre pas.

La couche de masquage opaque est de préférence une couche continue (aplat avec un bord plein ou en variante un bord en dégradé (ensemble de motifs).

La couche de masquage peut être à 2mm ou 3mm (moins de 5 mm) de la tranche du vitrage (la plus proche).

La couche de masquage peut être un bandeau encadrant le vitrage (pare-brise etc) notamment en émail noir. On crée donc une épargne dans cette couche de masquage.

Une autre couche de masquage (émail notamment noir etc) peut être en face F3 ou F4 notamment faisant face à la couche de masquage (et même de nature identique par exemple un émail notamment noir).

Le vitrage peut comporter des fils métalliques notamment chauffants côté face Fb notamment ancrés sur la face Fb et de préférence absents dans ledit trou.

On peut vouloir éviter les fils chauffants en regard du trou.

Les fils chauffants notamment ont une épaisseur inférieure ou égale à 0,1 mm de préférence de cuivre, de tungstène, d'or, d'argent ou aluminium ou d'alliages d'au moins deux de ces métaux.

Dans un mode de réalisation, une zone de chauffage du vitrage comporte une pluralité de fils métalliques individuels, appelés « fils métalliques chauffants » qui relient des « busbars » (barre « omnibus ») entre eux. Le courant de chauffage passe par ces fils métalliques individuels. Les fils sont avantageusement très minces de manière à ne pas, ou seulement très peu, détériorer la transparence du vitrage. De préférence, les fils métalliques ont une épaisseur inférieure ou égale à 0,1 mm, en particulier comprise entre 0,02 et 0,04 mm, et idéalement entre 0,024 mm et 0,029 mm. Les fils métalliques contiennent de préférence du cuivre, du tungstène, de l'or, de l'argent ou de l'aluminium ou un alliage d'au moins deux de ces métaux. L'alliage peut également contenir du molybdène, du rhénium, de l'osmium, de l'iridium, du palladium ou du platine.

Les fils métalliques sont de préférence isolés électriquement.

Pour le verre de la première feuille de verre et/ou de la deuxième feuille de verre, il s'agit de préférence d'un verre du type silico-sodo-calcique.

Le verre intérieur et/ou extérieur peut avoir subi un traitement chimique ou thermique du type durcissement, recuit ou une trempe (pour une meilleure résistance mécanique notamment) ou être semi trempé.

Le verre de la première feuille de verre et/ou de la deuxième feuille de verre est de préférence du type flotté, c'est-à-dire susceptible d'avoir été obtenu par un procédé consistant à déverser le verre fondu sur un bain d'étain en fusion (bain « float »). On entend par faces « atmosphère » et « étain », les faces ayant été respectivement en contact avec l'atmosphère régnant dans le bain float et en contact avec l'étain fondu. La face étain contient une faible quantité superficielle d'étain ayant diffusé dans la structure du verre.

La face F2 avec le revêtement antireflet peut aussi bien être la face « étain » la face « atmosphère ».

La première feuille de verre peut être par exemple un verre silico-sodo-calcique comme le verre Diamant^{®} de Saint-Gobain Glass, ou Optiwhite^{®} de Pilkington, ou B270^{®} de Schott, ou Sunmax^{®} d'AGC ou d'autre composition décrite dans le document WO04/025334. On peut aussi choisir le verre Planiclear^{®} de la société Saint-Gobain Glass

Avec les matières premières naturelles ordinaires, la teneur pondérale totale en oxyde de fer est de l'ordre de 0,1% (1000 ppm). Pour abaisser la teneur en oxyde de fer, on peut choisir des matières premières particulièrement pures.

Dans la présente invention, la teneur en Fe₂O₃ (fer total) de la première feuille de verre est de préférence inférieure à 0,015%, voire inférieure ou égale à 0,012%, notamment 0,010%, afin d'augmenter la transmission proche infrarouge du verre. La teneur en Fe₂O₃ est de préférence supérieure ou égale à 0,005%, notamment 0,008% pour ne pas trop pénaliser le coût du verre.

Pour augmenter plus encore la transmission de la première feuille de verre dans l'infrarouge, on peut diminuer la teneur en fer ferreux au profit de la teneur en fer ferrique, donc d'oxyder le fer présent dans le verre. On vise ainsi des verres ayant un « rédox » le plus faible possible, idéalement nul ou quasi nul. Ce nombre peut varier entre 0 et 0,9, des rédox nuls correspondant à un verre totalement oxydé.

Les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer.

Le rédox de la première feuille de verre est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention (première et deuxième feuille), la silice SiO₂ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

Ladite première feuille de verre peut avoir une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10% |
| Na₂O | 5 - 20 % |
| K₂O | 0 - 10 % |
| BaO | 0 - 5 %, de préférence 0, |
| SO₃ | 0,1 - 0,4% |
| Fe₂O₃ (fer total) | 0 à 0,015%, |
| et Rédox | 0,1 - 0,3. |

Dans l'ensemble du texte, les pourcentages sont des pourcentages pondéraux.

Les feuilles de verre sont de préférence formées par flottage sur un bain d'étain. D'autres types de procédé de formage peuvent être employés, tels que les procédés d'étirage, procédé « down-draw » (procédé d'étirage par le bas), procédé de laminage, procédé Fourcault...

La composition de verre de la première feuille de verre peut comprendre, outre les impuretés inévitables contenues notamment dans les matières premières, une faible proportion (jusqu'à 1 %) d'autres constituants, par exemple des agents aidant à la fusion ou l'affinage du verre (Cl...), ou encore des éléments provenant de la dissolution des réfractaires servant à la construction des fours (par exemple ZrO₂). Pour les raisons déjà évoquées, la composition selon l'invention ne comprend de préférence pas d'oxydes tels que Sb₂O₃, As₂O₃ ou CeO₂.

La composition de la première feuille de verre ne comprend de préférence aucun agent absorbant les infrarouges (notamment pour une longueur d'ondes comprise entre 800 et 1800nm). En particulier, la composition selon l'invention ne contient de préférence aucun des agents suivants : les oxydes d'éléments de transition tels que CoO, CuO, Cr₂O₃, NiO, MnO₂, V₂O₅, les oxydes de terres rares tels que CeO₂, La₂O₃, Nd₂O₃, Er₂O₃, ou encore les agents colorants à l'état élémentaire tels que Se, Ag, Cu. Parmi les autres agents de préférence exclus figurent également les oxydes des éléments suivants : Sc, Y, Pr, Sm, Eu, Gd, Tb, Dy, Ho, Tm, Yb, Lu. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre.

De préférence, la première feuille de verre présente une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10% |
| Na₂O | 5 - 20 % |
| K₂O | 0 - 10 % |
| BaO | 0 - 5 %, de préférence 0, |
| SO₃ | > 0,2 - 0,4% |
| Fe₂O₃ (fer total) | 0 à 0,015%, |
| Et Rédox | 0,2 - 0,30. |

La première feuille de verre peut présenter une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10% |
| Na₂O | 5 - 20 % |
| K₂O | 0 - 10 % |
| BaO | 0 - 5 %, de préférence 0, |
| SO₃ | 0,1 - 0,4% |
| Fe₂O₃ (fer total) | 0 à 0,02%, |
| Et Rédox | 0,15 - 0,3. |

Dans la présente invention, la teneur en Fe₂O₃ (fer total) est de préférence inférieure à 0,015%, voire inférieure ou égale à 0,012%, notamment 0,010%, ce afin d'augmenter la transmission proche infrarouge du verre. La teneur en Fe₂O₃ est de préférence supérieure ou égale à 0,005%, notamment 0,008% pour ne pas trop pénaliser le coût du verre.

Le rédox est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention, la silice SiO₂ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

D'autres compositions préférées selon l'invention sont reproduites ci-après :

| | |
|---|---|
| SiO₂ | 65 - 75 % |

| | |
|---|---|
| Al₂O₃ | 0 - 3 % |
| CaO | 7 - 12 % |
| MgO | 2 - 5 % |
| Na₂O | 10 - 15% |
| K₂O | 0 - 5 % |
| SO₃ | 0,1 - 0,3% |
| Fe₂O₃ (fer total) | 0 à moins de 0,015%, |
| Et Rédox | 0,1 - 0,3. |

D'autres compositions préférées selon l'invention sont reproduites ci-après :

| | |
|---|---|
| SiO₂ | 65 - 75 % |
| Al₂O₃ | 0 - 5 % |
| CaO | 7 - 12 % |
| MgO | 1 - 5 % |
| Na₂O | 10 - 15% |
| K₂O | 0 - 5 % |
| SO₃ | 0,2 - 0,4% |
| Fe₂O₃ (fer total) | 0 à moins de 0,015%, |
| Et Rédox | 0,1 - 0,3. |

Sans sortir du cadre de l'invention, l'intercalaire peut bien entendu comprendre plusieurs feuillets en matière thermoplastique de natures différentes, par exemple de duretés différentes pour assurer une fonction acoustique, comme par exemple décrit dans la publication US 6132882, notamment une ensemble de feuillets de PVB de duretés différentes. De même l'une des feuilles de verres peut être amincie par rapport aux épaisseurs classiquement utilisées.

L'intercalaire peut selon l'invention présenter une forme en coin, notamment en vue d'une application HUD (Head Up Display pour visualisation tête haute). Egalement l'un des feuillets de l'intercalaire peut être teinté dans la masse.

Comme intercalaire de feuilletage usuel, outre le PVB, on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1mm, notamment 0,3 et 0,7mm.

L'intercalaire de feuilletage peut comprendre un autre film plastique fonctionnel (transparent, clair ou teinté) par exemple un film en poly(éthylène téréphtalate) PET porteur d'une couche athermique, électroconductrice etc par exemple on a PVB/ film fonctionnel/PVB entre les faces F2 et F3.

Le film plastique transparent peut être d'une épaisseur comprise entre 10 et 100 µm. Le film plastique transparent peut être plus largement en polyamide, polyester, polyoléfine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M^{®}, mais aussi de nombreux autres films (par exemple en PC, PE, PEN, PMMA, PVC), qui sont visuellement aussi transparents que possible et ne se modifient pas dans l'autoclave en ce qui concerne leur surface et leur consistance.

Afin de limiter l'échauffement dans l'habitacle ou de limiter l'usage d'air conditionné, l'une des feuilles de verre au moins (de préférence le verre extérieur) est teintée, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4. La couche TCO (d'un oxyde transparent électro-conducteur) est de préférence une couche d'oxyde d'étain dopé au fluor (SnO₂:F) ou une couche d'oxyde mixte d'étain et d'indium (ITO).

Naturellement l'application la plus recherchée est que le vitrage soit un pare-brise d'un véhicule routier (automobile) ou même ferroviaire (à vitesse modérée).

Le vitrage peut donc comporter sur la face F2 une couche fonctionnelle athermique, notamment électroconductrice, éventuellement chauffante, en particulier un empilement à l'argent, absente dudit trou traversant au moins dans la zone centrale et en bordure du trou traversant entre la face F2 et Fa, le revêtement antireflet étant éventuellement en contact de la couche fonctionnelle notamment sur ou sous la couche fonctionnelle athermique.

L'invention se rapporte également à un dispositif qui comprend :
- le vitrage tel que décrit précédemment
- un système de vision infrarouge à ladite longueur d'onde de travail voire multi spectral, dans le visible, notamment entre 500 et 600nm, disposé dans l'habitacle derrière ledit vitrage de façon à envoyer et/ou recevoir un rayonnement après traversée de la première feuille de verre au niveau dudit trou traversant.

Certains modes de réalisations avantageux mais non limitatif de la présente invention sont décrits ci-après, qui peuvent bien entendu combinés entres eux le cas échéant.
La figure 1 schématise en vue de coupe un pare-brise 100 dans un premier mode de réalisation de l'invention avec un système de vision infrarouge tel qu'un LIDAR.
La figure 2 schématise en vue de face (coté habitacle) le pare-brise 100 de la figure 1.
La figure 3 schématise en vue de coupe un pare-brise 200 selon l'invention, en coupe avec un système de vision infrarouge tel qu'un LIDAR dans un deuxième mode de réalisation de l'invention.
La figure 4 schématise en vue de face (coté habitacle) le pare-brise 200 de la figure 3.

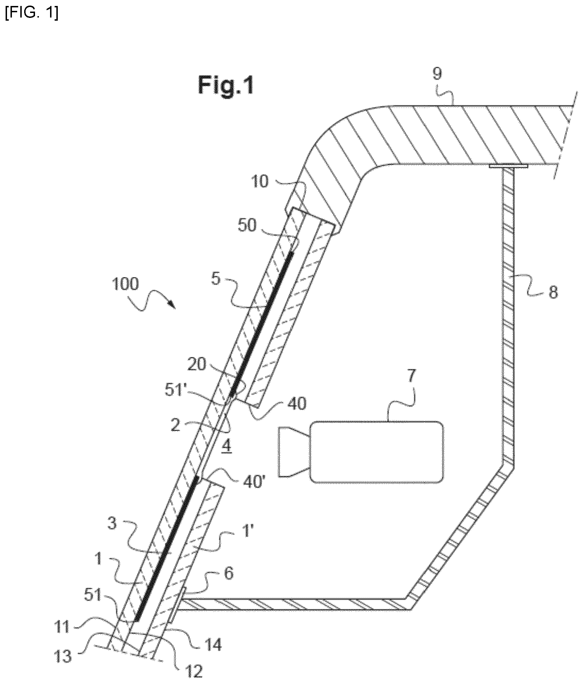

La figure 1 schématise un pare-brise 100 selon l'invention, en coupe avec un système de vision infrarouge tel qu'un LIDAR à 905nm ou 1550nm. Il peut aussi d'agir d'un système multi spectral pouvant travailler dans le visible et jusqu'à 1800nm.

Ce système de vision 7 est placé derrière le pare-brise face à une zone qui se situe de préférence dans la partie centrale et supérieure du pare-brise. Dans cette zone, le système de vision infrarouge 7 est orienté avec un certain angle vis-à-vis de la surface du pare-brise (face F2). En particulier, le LIDAR peut être orienté directement vers la zone de saisie d'images, selon une direction proche de la parallèle au sol, c'est-à-dire légèrement inclinée vers la route. Autrement dit, le LIDAR 7 peut être orienté vers la route selon un angle faible avec un champ de vision adapté pour remplir ses fonctions.

Le pare-brise est un vitrage feuilleté classique comprenant :
- une feuille de verre externe 1, avec face extérieure F1 et face intérieure F2
- et une feuille de verre interne 1', par exemple d'épaisseur ou même de 1,6mm ou même moins, avec face extérieure F3 et face intérieure F4 côté habitacle
- les deux feuilles de verre étant liées l'une à l'autre par un intercalaire en matière thermoplastique 3, le plus souvent en polyvinylbutyral (PVB) de préférence clair, d'épaisseur submillimétrique éventuellement présentant une section transversale diminuant en forme en coin du haut vers le bas du vitrage feuilleté, par exemple un PVB (RC41 de Solutia ou d'Eastman) d'épaisseur 0,76mm environ ou en variante si nécessaire un PVB acoustique (tricouche ou quadricouche) par exemple d'épaisseur 0,81mm environ, par exemple intercalaire en trois feuillets PVB.

De façon classique et bien connue, le pare-brise est obtenu par feuilletage à chaud des éléments 1, 2 et 3..On choisit un PVB clair de 0,76mm.

La première-feuille de verre comporte, sur la face F2, un revêtement antireflet 2, à au moins une longueur d'onde dite de travail dans l'infrarouge comprise entre 800nm à 1800nm, notamment entre 850nm et 1600nm avec une surface libre (non recouverte par l'intercalaire de feuilletage et la deuxième feuille de verre) au moyen d'un trou traversant 4 dans l'épaisseur de l'intercalaire et dans l'épaisseur de la deuxième feuille de verre donc trou délimité par les parois 40 et 40'.

La première feuille de verre 1 notamment à base de silice, sodocalcique, silicosodo calcique (de préférence), aluminosilicate, borosilicate, présente une teneur pondérale en oxyde de fer total (exprimé sous la forme Fe₂O₃) d'au plus 0,05% (500ppm), de préférence d'au plus 0,03% (300ppm) et d'au plus 0,015% (150ppm) et notamment supérieure ou égale à 0,005%. La première feuille de verre peut présenter un rédox supérieur ou égal à 0,15, et notamment compris entre 0,2 et 0,30, notamment entre 0,25 et 0,30.

On choisit notamment un verre OPTWHITE et de 1,95mm.

La deuxième feuille de verre 1' notamment à base de silice, sodocacique, de préférence silicosodo calcique (et comme la première feuille de verre), voire aluminosilicate, ou borosilicate présente une teneur pondérale en oxyde de fer total d'au moins 0,4% et de préférence d'au plus 1,5% La deuxième feuille de verre peut présenter un rédox entre 0,22 et 0,35 ou 0,30.

On peut citer notamment les verres de la Demanderesse dénommés TSAnx (0,5 à 0,6% de fer) TSA2+, TSA3+(0,8 à 0,9% de fer), TSA4+(1% de fer), TSA5+, par exemple verts. On choisit par exemple un verre TSA3+ de 1,6mm.

Avec un verre OPTIWHITE de 1,95mm, un revêtement antireflet de 110nm on obtient les transmission totale côté face F2 suivantes :
- à 90° de 92,5% à 905nm et 92,0% à 1550nm
- à 60° de 91,7% à 905nm et 91,5% à 1550nm.

Selon l'invention, dans une région centrale périphérique le long du bord longitudinal supérieur, le pare-brise comporte donc un trou traversant 4 dans l'épaisseur de l'intercalaire de feuilletage 3 et de la deuxième feuille de verre 1', trou donc délimité par leurs parois latérales respectives 40' et 40.

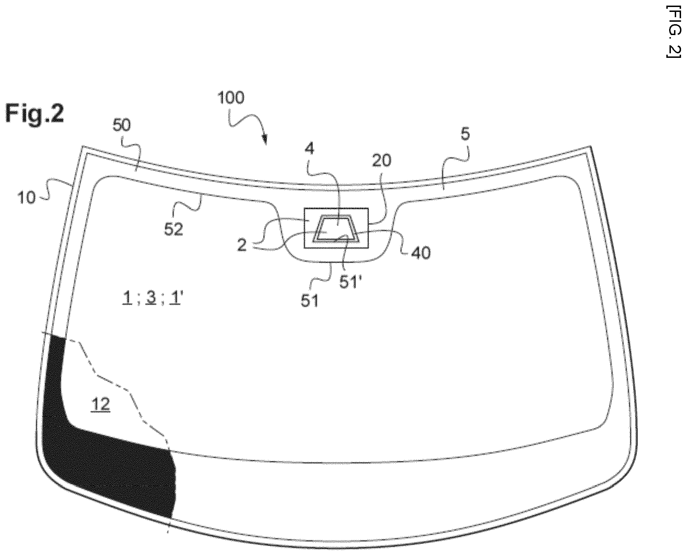

Comme montré en figures 1 et 2, le trou est ici trou fermé (entouré par la paroi de la feuille de verre), donc au sein du vitrage notamment -de section trapézoïdale - comportant :
- un premier grand coté ou bord longitudinal dit supérieur le plus proche de la tranche du bord longitudinal supérieur du vitrage 10-parallèle à cette tranche de longueur d'au plus 20cm par exemple 10,6cm et espacé d'au moins 5cm ou 6cm de la tranche (du grand côté)
- un deuxième grand coté ou bord longitudinal dit inférieur (le plus éloigné de la tranche du bord longitudinal supérieur 10, proche de la zone centrale) parallèle au premier grand côté de longueur d'au plus 25cm ou 20cm et de préférence plus grande que celle du premier grand côté par exemple 17,5cm - de hauteur (entre les grands côtés) d'au moins 5cm ici de 10cm.

Le système de vision infrarouge 7 est en vis-à-vis du trou traversant 4.

Le trou traversant 4 peut être alternativement une encoche donc un trou traversant débouchant de préférence côté toit.

Le trou traversant 4 peut être dans une autre région du pare-brise 100 ou même dans un autre vitrage du véhicule en particulier la lunette arrière.

Le revêtement antireflet 4 est également local. Ici il est de forme rectangulaire dans cette région périphérique et ses bords 20 dépassent au maximum de 10mm des parois délimitant le trou 4 entre la face 12 et la face Fa.

Le pare-brise 100 comporte sur la face F2 12 une couche de masquage opaque par exemple noire 5, tel qu'une couche d'émail ou une laque, formant un cadre périphérique du parebrise (ou de la lunette) et dans la zone périphérique avec le trou traversant il comporte une épargne 51' suffisamment grande pour ne pas gêner les performances du LIDAR 7 mais apte à maquer le boîtier 8 (plastique, métal etc) du LIDAR 7. Le boitier 8 peut être collé à la face F4 par une colle 6 et au toit 9.

Ici, le revêtement antireflet est sur la face F2 et recouvre un peu la couche de masquage Le pare-brise 100 peut comporter un ensemble de fils métalliques quasi invisibles, par exemple de 50µm qui sont mis en place sur une face Fb côté face F3 de l'intercalaire de feuilletage 3 (sur toute la surface) , en forme des lignes droites ou non. Ces fils sont absents du trou traversant 4.

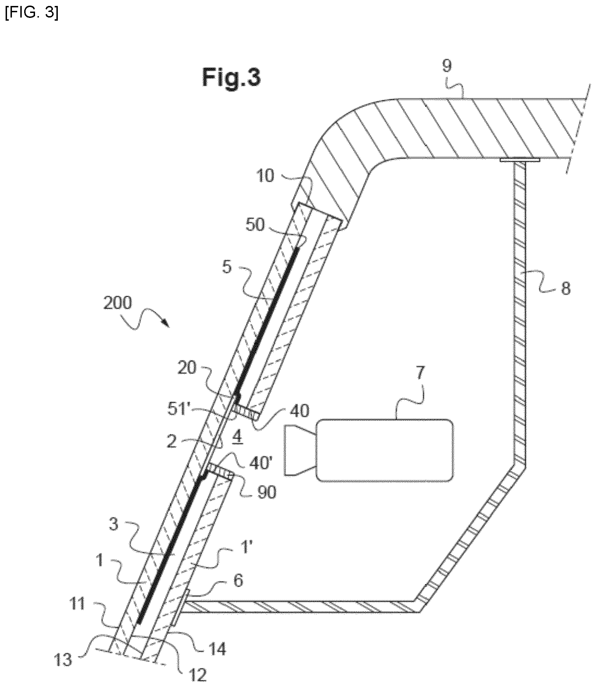

La figure 3 schématise en vue de coupe un pare-brise 200 en coupe avec un système de vision infrarouge tel qu'un LIDAR dans un deuxième mode de réalisation de l'invention.

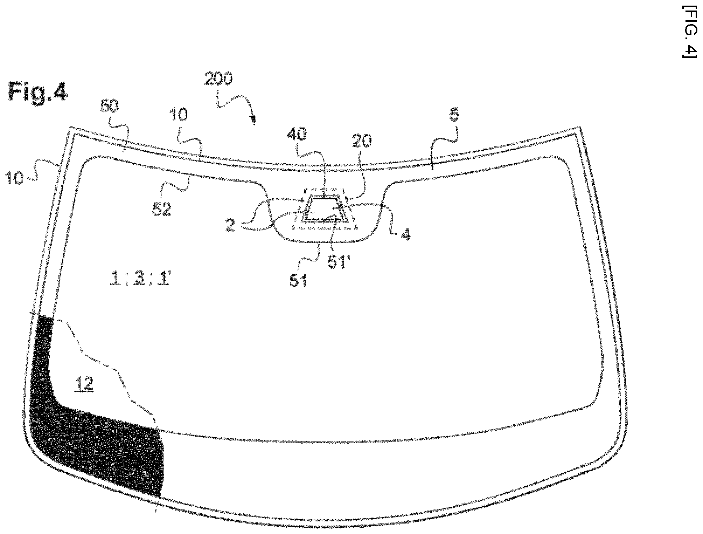

La figure 4 schématise en vue de face (coté habitacle) le pare-brise 200 de la figure 3. Seules les différences avec le premier mode sont explicitées ci-après.

Le revêtement antireflet 4 sur la face F2 est cette fois-ci et sous la couche de masquage. Le revêtement antireflet 2 présente une forme homothétique à celle de la section du trou donc ici de forme trapézoïdale (en pointillés sur la figure 4 car non visibles) dans cette région périphérique et ses bords 20 dépassent de 10mm des parois délimitant le trou 4 entre la face 12 et la face Fa.

Dans le trou traversant est logé un insert 90 de type bague de largeur d'au plus 1,5cm par exemple en matière souple, polymère (polycarbonate etc) monté sur (notamment collé ou en force) la paroi 40 de la deuxième feuille de verre délimitant (en partie haute) le trou et également en contact avec la paroi 40' de l'intercalaire de feuilletage et touche le revêtement antireflet.

Cet insert 90 peut servir de renfort mécanique, et/ou pour la fixation du LIDAR. Il peut aussi être utilisé dans le premier mode de réalisation.

Cet insert peut s'étendre au-delà du trou, notamment sur la face F4.

En relation avec les réalisations présentées, des variantes possibles sont les suivantes (sans être exhaustives) éventuellement cumulables :
- le revêtement antireflet ne dépasse pas du trou traversant et même est espacé du bord du trou traversant de préférence d'au plus 1cm
- le revêtement antireflet est espacé de la couche de masquage (par exemple qui est en face F2 notamment de l'émail) ou au moins ne la recouvre pas.
- le revêtement antireflet comporte une sous couche de protection chimique notamment une couche de silice dense, notamment par sol-gel, surmonté de la couche fonctionnelle de silice poreuse sol gel.
- la face F2 comporte une couche fonctionnelle athermique sous ou sur l'émail, revêtement antireflet étant éventuellement en contact de la couche fonctionnelle notamment sur ou sous la couche fonctionnelle athermique.

## Revendications

1. Vitrage de véhicule (100, 200), notamment routier ou ferroviaire, en particulier parebrise, lunette arrière, en particulier bombé, d'épaisseur donnée, comportant :
- une première feuille de verre (1) destinée à être le vitrage extérieur avec une première face principale externe F1 (11) et une deuxième face principale interne F2 (12) orientée vers l'habitacle
- un intercalaire de feuilletage (3) en matière polymère avec une face principale Fa orienté vers F2 et avec une face principale Fb opposée à Fa
- une deuxième feuille de verre (1') destinée à être le vitrage intérieur avec une troisième face principale F3 (13) côté F2 et une quatrième face principale F4 (14) interne F2 orienté vers l'habitacle
**caractérisé en ce que** :
la première feuille de verre comporte, sur la face F2, un revêtement antireflet (2) à au moins une longueur d'onde dite de travail dans l'infrarouge dans une gamme allant de 800nm à 1800nm, avec une surface libre (20) au moyen d'un trou traversant (4) dans l'épaisseur de l'intercalaire de feuilletage et dans l'épaisseur de la deuxième feuille de verre,
la première feuille de verre présente une teneur pondérale en oxyde de fer total d'au plus 0,05%
la deuxième feuille de verre présente une teneur pondérale en oxyde de fer total d'au moins 0,4%.

2. Vitrage de véhicule (100, 200) selon la revendication précédente **caractérisé en ce que** l'ensemble première feuille de verre (1) avec ledit revêtement antireflet (2) présente une transmission totale d'au moins 90,0%, 91,0%, ou 92,0% à la longueur d'onde de travail, notamment 905±5nm et/ou 1550±5nm, mesurée à 90° ou même de préférence à 60° ou encore de 90° et 60°.

3. Vitrage de véhicule (100, 200) selon l'une des revendications précédentes **caractérisé en ce que** le trou traversant (4) est dans une région périphérique de préférence en bord longitudinal supérieur et même dans une région centrale périphérique et le revêtement antireflet est local dans ladite région périphérique.

4. Vitrage de véhicule (100, 200) selon l'une des revendications précédentes **caractérisé en ce que** le trou traversant (4) présente une section, notamment trapézoïdale ou rectangulaire ou en disque ou ovale, de plus petite dimension d'au moins 5cm et de préférence de plus grande dimension d'au plus 30cm ou 25cm et de préférence le revêtement antireflet occupe une surface de longueur d'au plus 40cm ou 30cm.

5. Vitrage de véhicule (100, 200) selon l'une des revendications précédentes **caractérisé en ce que** le trou traversant (4) est fermé notamment espacé de la tranche du vitrage la plus proche d'au moins 2cm.

6. Vitrage de véhicule (200) selon l'une des revendications précédentes **caractérisé en ce qu'**un insert (90) de préférence de largeur d'au plus 1,5cm notamment en matière polymère est monté sur le trou traversant au moins sur la paroi (40) de la deuxième feuille de verre délimitant une partie du trou traversant et éventuellement sur également sur la paroi de l'intercalaire de verre délimitant une autre partie du trou traversant.

7. Vitrage de véhicule (100, 200) selon l'une des revendications précédentes **caractérisé en ce qu'**un le revêtement antireflet (2) est local dépassant au-delà du trou traversant (4) de préférence d'au plus 100mm entre la face F2 et la face Fa.

8. Vitrage de véhicule (100, 200) selon l'une des revendications précédentes **caractérisé en ce que** le revêtement antireflet comporte une couche de silice poreuse.

9. Vitrage de véhicule (100, 200) selon l'une des revendications précédentes **caractérisé en ce que** le revêtement antireflet comporte une sous couche de protection chimique notamment une couche de silice dense, notamment par sol-gel, surmonté d'une couche fonctionnelle de silice poreuse notamment sol gel.

10. Vitrage de véhicule (100, 200) selon l'une des revendications précédentes **caractérisé en ce qu'**il comporte entre la face F2 et Fa, une couche de masquage opaque (5), notamment un émail, sur la face F2 et/ou sur la face Fa (31), couche de masquage présente en bordure du trou traversant entre la face F2 et Fa, en particulier en zone périphérique et même centrale et de préférence le long du bord longitudinal du vitrage, notamment un pare-brise, le revêtement antireflet étant en contact de la couche de masquage opaque, la couche de masquage opaque présentant une épargne (51') au droit dudit trou traversant laissant la surface libre du revêtement antireflet (2).

11. Vitrage de véhicule (100, 200) selon la revendication précédente **caractérisé en ce que** la couche de masquage (5) est en face F2 et le revêtement antireflet (2) est sur la couche de masquage ou sous la couche de masquage et/ou **en ce que** la couche de masquage est sur la face Fa, notamment une encre, et le revêtement antireflet est en contact avec la couche de masquage.

12. Vitrage de véhicule selon l'une des revendications 1 à 9 **caractérisé en ce qu'**il comporte entre la face F2 et Fa, une couche de masquage opaque (5), notamment un émail, sur la face F2 et/ou sur la face Fa (31), couche de masquage présente en bordure du trou traversant entre la face F2 et Fa, en particulier en zone périphérique et même centrale et de préférence le long du bord longitudinal du vitrage, notamment un parebrise, le revêtement antireflet est espacé de la couche de masquage ou au moins ne le recouvre pas.

13. Vitrage de véhicule selon l'une des revendications précédentes **caractérisé en ce qu'**il comporte des fils métalliques notamment chauffants côté face Fb notamment ancrés sur la face Fb et de préférence absents dans ledit trou.

14. Vitrage de véhicule selon l'une des revendications précédentes **caractérisé en ce qu'**il comporte sur la face F2 une couche fonctionnelle athermique, notamment électroconductrice, éventuellement chauffante, en particulier un empilement à l'argent, absente dudit trou traversant au moins dans la zone centrale et présente en bordure du trou traversant entre la face F2 et Fa, le revêtement antireflet étant éventuellement en contact de la couche fonctionnelle notamment sur ou sous la couche fonctionnelle athermique.

15. Vitrage de véhicule (100, 200) selon l'une des revendications précédentes **caractérisé en ce que** l'intercalaire de feuilletage comporte un PVB (3), éventuellement comportant PVB/film fonctionnel tel que film polymère avec revêtement athermique /PVB.

16. Dispositif **caractérisé en ce qu'**il comprend :
- ledit vitrage (100, 200) selon l'une des revendications précédentes
- un système de vision infrarouge à ladite longueur d'onde de travail voire multspectral, dans le visible (7), disposé dans l'habitacle derrière ledit vitrage de façon à envoyer et/ou recevoir un rayonnement après traversée de la première feuille de verre au niveau dudit trou traversant.

## Patentansprüche

1. Fahrzeugverglasung (100, 200), insbesondere für ein Straßen- oder Eisenbahnfahrzeug, im Besonderen eine Windschutzscheibe, eine Heckscheibe, im Besonderen gewölbt, mit gegebener Dicke, umfassend:
- eine erste Glasscheibe (1), die dazu bestimmt ist, die Außenverglasung zu sein, mit einer ersten äußeren Hauptseite F1 (11) und einer zweiten inneren Hauptseite F2 (12), die dem Fahrgastraum zugewandt ist
- eine Verbundzwischenlage (3) aus Polymermaterial mit einer Hauptseite Fa, die F2 zugewandt ist, und mit einer Hauptseite Fb, die Fa gegenüberliegt
- eine zweite Glasscheibe (1'), die dazu bestimmt ist, die Innenverglasung zu sein, mit einer dritten Hauptseite F3 (13) auf der Seite von F2 und einer vierten Hauptseite F4 (14) im Inneren von F2, die dem Fahrgastraum zugewandt ist,
**dadurch gekennzeichnet, dass:**
die erste Glasscheibe auf der Seite F2 eine Antireflexionsbeschichtung (2) bei mindestens einer sogenannten Arbeitswellenlänge im Infrarotbereich in einem Bereich von 800 nm bis 1800 nm mit einer freien Oberfläche (20) mittels eines Durchgangslochs (4) in der Dicke der Verbundzwischenlage und in der Dicke der zweiten Glasscheibe umfasst,
die erste Glasscheibe einen gewichtsmäßigen Gehalt an Gesamteisenoxid von höchstens 0,05 % aufweist
die zweite Glasscheibe einen gewichtsmäßigen Gehalt an Gesamteisenoxid von mindestens 0,4 Gew.-% aufweist.

2. Fahrzeugverglasung (100, 200) nach dem vorstehenden Anspruch, **dadurch gekennzeichnet, dass** die Anordnung der ersten Glasscheibe (1) mit der Antireflexionsbeschichtung (2) eine Gesamttransmission von mindestens 90,0 %, 91,0 % oder 92,0 % bei der Arbeitswellenlänge, insbesondere 905±5 nm und/oder 1550±5 nm, gemessen bei 90° oder sogar vorzugsweise bei 60° oder auch von 90° und 60°, aufweist.

3. Fahrzeugverglasung (100, 200) nach einem der vorstehenden Ansprüche, **dadurch gekennzeichnet, dass** das Durchgangsloch (4) in einem Randbereich, vorzugsweise an der oberen Längskante und sogar in einem zentralen Randbereich liegt und die Antireflexionsbeschichtung in dem Randbereich lokal ist.

4. Fahrzeugverglasung (100, 200) nach einem der vorstehenden Ansprüche, **dadurch gekennzeichnet, dass** das Durchgangsloch (4) einen Querschnitt, insbesondere trapezförmig oder rechteckig oder scheibenförmig oder oval, mit einer kleinsten Abmessung von mindestens 5 cm und vorzugsweise einer größten Abmessung von höchstens 30 cm oder 25 cm aufweist und vorzugsweise die Antireflexionsbeschichtung eine Oberfläche einer Länge von höchstens 40 cm oder 30 cm einnimmt.

5. Fahrzeugverglasung (100, 200) nach einem der vorstehenden Ansprüche, **dadurch gekennzeichnet, dass** das Durchgangsloch (4) geschlossen ist, insbesondere mindestens 2 cm von dem nächstgelegenen Teilabschnitt der Verglasung beabstandet.

6. Fahrzeugverglasung (200) nach einem der vorstehenden Ansprüche, **dadurch gekennzeichnet, dass** ein Einsatz (90), vorzugsweise einer Breite von höchstens 1,5 cm, insbesondere aus Polymermaterial, auf dem Durchgangsloch montiert ist, mindestens auf der Wand (40) der zweiten Glasscheibe, die einen Teil des Durchgangslochs begrenzt, und eventuell auch auf der Wand der Glaszwischenlage, die einen anderen Teil des Durchgangslochs begrenzt.

7. Fahrzeugverglasung (100, 200) nach einem der vorstehenden Ansprüche, **dadurch gekennzeichnet, dass** eine Antireflexionsbeschichtung (2) lokal über das Durchgangsloch (4) hinausragt, vorzugsweise um höchstens 100 mm zwischen der Seite F2 und der Seite Fa.

8. Fahrzeugverglasung (100, 200) nach einem der vorstehenden Ansprüche, **dadurch gekennzeichnet, dass** die Antireflexionsbeschichtung eine poröse Siliziumdioxidschicht umfasst.

9. Fahrzeugverglasung (100, 200) nach einem der vorstehenden Ansprüche, **dadurch gekennzeichnet, dass** die Antireflexionsbeschichtung eine chemische Schutzunterschicht, insbesondere eine dichte Siliziumdioxidschicht, insbesondere durch Sol-Gel, umfasst, auf der eine funktionelle poröse Siliziumdioxidschicht, insbesondere Sol-Gel, aufgebracht ist.

10. Fahrzeugverglasung (100, 200) nach einem der vorstehenden Ansprüche, **dadurch gekennzeichnet, dass** sie zwischen der Seite F2 und Fa eine opake Maskierungsschicht (5), insbesondere eine Emaille, auf der Seite F2 und/oder der Seite Fa (31) umfasst, wobei die Maskierungsschicht an dem Rand des Durchgangslochs zwischen der Seite F2 und Fa, im Besonderen in dem Rand- und sogar zentralen Bereich und vorzugsweise entlang der Längskante der Verglasung, insbesondere einer Windschutzscheibe, vorhanden ist, wobei die Antireflexionsbeschichtung in Kontakt mit der opaken Maskierungsschicht ist, wobei die opake Maskierungsschicht eine Aussparung (51') direkt unter dem Durchgangsloch aufweist, die die Oberfläche frei von der Antireflexionsbeschichtung (2) lässt.

11. Fahrzeugverglasung (100, 200) nach dem vorstehenden Anspruch, **dadurch gekennzeichnet, dass** die Maskierungsschicht (5) auf der Seite F2 liegt und die Antireflexionsbeschichtung (2) auf der Maskierungsschicht oder unter der Maskierungsschicht liegt und/oder dass die Maskierungsschicht auf der Seite Fa liegt, insbesondere eine Tinte, und die Antireflexionsbeschichtung in Kontakt mit der Maskierungsschicht ist.

12. Fahrzeugverglasung nach einem der Ansprüche 1 bis 9,
**dadurch gekennzeichnet, dass** sie zwischen der Seite F2 und Fa eine opake Maskierungsschicht (5), insbesondere eine Emaille, auf der Seite F2 und/oder der Seite Fa (31) umfasst, wobei die Maskierungsschicht an dem Rand des Durchgangslochs zwischen der Seite F2 und Fa, im Besonderen in dem Rand- und sogar zentralen Bereich und vorzugsweise entlang der Längskante der Verglasung, insbesondere einer Windschutzscheibe, vorhanden ist, wobei die Antireflexionsbeschichtung von der Maskierungsschicht beabstandet ist oder sie mindestens nicht bedeckt.

13. Fahrzeugverglasung nach einem der vorstehenden Ansprüche,
**dadurch gekennzeichnet, dass** sie Metalldrähte, insbesondere Heizdrähte, auf der Seite Fb umfasst, die insbesondere auf der Seite Fb verankert sind und vorzugsweise in dem Loch fehlen.

14. Fahrzeugverglasung nach einem der vorstehenden Ansprüche,
**dadurch gekennzeichnet, dass** sie auf der Seite F2 eine athermische, insbesondere elektrisch leitende, gegebenenfalls heizende Funktionsschicht, im Besonderen einen Silberstapel, umfasst, die in dem Durchgangsloch mindestens in dem zentralen Bereich fehlt und an dem Rand des Durchgangslochs zwischen der Seite F2 und Fa vorhanden ist, wobei die Antireflexionsbeschichtung gegebenenfalls mit der Funktionsschicht in Kontakt ist, insbesondere auf oder unter der athermischen Funktionsschicht.

15. Fahrzeugverglasung (100, 200) nach einem der vorstehenden Ansprüche, **dadurch gekennzeichnet, dass** die Verbundzwischenlage ein PVB (3) umfasst, das gegebenenfalls eine PVB/Funktionsfolie wie eine Polymerfolie mit athermischer Beschichtung/PVB umfasst.

16. Vorrichtung, **dadurch gekennzeichnet, dass** sie umfasst:
- die Verglasung (100, 200) nach einem der vorstehenden Ansprüche
- ein Infrarotsichtsystem bei der genannten Arbeitswellenlänge oder sogar multspektral in dem sichtbaren Bereich (7), das in dem Fahrgastraum hinter der Verglasung angeordnet ist, um Strahlung zu senden und/oder zu empfangen, nachdem die erste Glasscheibe an dem Durchgangsloch durchdrungen wurde.

## Claims

1. A glazing for a vehicle (100, 200), in particular a road or rail vehicle, especially a windshield or a back window, in particular bent, of given thickness, comprising:
- a first glass sheet (1) intended to be the exterior glazing with a first external main face F1 (11) and a second internal main face F2 (12) oriented toward the passenger compartment
- a lamination interlayer (3) made of polymer material with a main face Fa oriented toward F2 and with a main face Fb opposite to Fa
- a second glass sheet (1') intended to be the interior glazing with a third main face F3 (13), side, and a fourth internal main face F4 (14) F2 oriented toward the passenger compartment
**characterized in that**:
the first glass sheet comprises, on the face F2, an antireflective coating (2), antireflective at at least one "working" wavelength in the infrared in a range extending from 800 nm to 1800 nm, with a surface which is free (20) by means of a traversing hole (4) in the thickness of the lamination interlayer and in the thickness of the second glass sheet, the first glass sheet exhibits a content by weight of total iron oxide of at most 0.05%, the second glass sheet exhibits a content by weight of total iron oxide of at least 0.4%.

2. The vehicle glazing (100, 200) as claimed in the preceding claim, **characterized in that** the assembly first glass sheet (1) with said antireflective coating (2) exhibits a total transmission of at least 90.0%, 91.0% or 92.0% at the working wavelength, in particular 905 ± 5 nm and/or 1550 ± 5 nm, measured at 90° or even preferably at 60° or also of 90° and 60°.

3. The vehicle glazing (100, 200) as claimed in either of the preceding claims, **characterized in that** the traversing hole (4) is in a peripheral region, preferably at the upper longitudinal edge and even in a peripheral central region, and the antireflective coating is local in said peripheral region.

4. The vehicle glazing (100, 200) as claimed in one of the preceding claims, **characterized in that** the traversing hole (4) exhibits a section, in particular trapezoidal or rectangular or as a disk or oval, with a smaller dimension of at least 5 cm and preferably with a larger dimension of at most 30 cm or 25 cm and preferably the antireflective coating occupies a surface area with a length of at most 40 cm or 30 cm.

5. The vehicle glazing (100, 200) as claimed in one of the preceding claims, **characterized in that** the traversing hole (4) is closed, in particular spaced from the closest edge face of the glazing by at least 2 cm.

6. The vehicle glazing (200) as claimed in one of the preceding claims, **characterized in that** an insert (90), preferably with a width of at most 1.5 cm, in particular made of polymer material, is mounted on the traversing hole at least on the wall (40) of the second glass sheet delimiting a part of the traversing hole and optionally also on the wall of the lamination interlayer delimiting another part of the traversing hole.

7. The vehicle glazing (100, 200) as claimed in one of the preceding claims, **characterized in that** the antireflective coating (2) is local, overstepping beyond the traversing hole (4), preferably by at most 100 mm, between the face F2 and the face Fa.

8. The vehicle glazing (100, 200) as claimed in one of the preceding claims, **characterized in that** the antireflective coating comprises a porous silica layer.

9. The vehicle glazing (100, 200) as claimed in one of the preceding claims, **characterized in that** the antireflective coating comprises a chemical protection underlayer, in particular a dense silica layer, in particular by the sol-gel process, surmounted by an, in particular sol-gel, porous silica functional layer.

10. The vehicle glazing (100, 200) as claimed in one of the preceding claims, **characterized in that** it comprises, between the face F2 and Fa, an opaque masking layer (5), in particular an enamel, on the face F2 and/or on the face Fa (31), which masking layer is present along the edge of the traversing hole between the face F2 and Fa, in particular in the peripheral and even central zone and preferably along the longitudinal edge of the glazing, in particular a windshield, the antireflective coating being in contact with the opaque masking layer, the opaque masking layer exhibiting a gap (51') in line with said traversing hole leaving the surface free of the antireflective coating (2).

11. The vehicle glazing (100, 200) as claimed in the preceding claim, **characterized in that** the masking layer (5) is on face F2 and the antireflective coating (2) is on the masking layer or under the masking layer and/or **in that** the masking layer is on the face Fa, in particular an ink, and the antireflective coating is in contact with the masking layer.

12. The vehicle glazing as claimed in one of claims 1 to 9, **characterized in that** it comprises, between the face F2 and Fa, an opaque masking layer (5), in particular an enamel, on the face F2 and/or on the face Fa (31), which masking layer is present along the edge of the traversing hole between the face F2 and Fa, in particular in the peripheral and even central zone and preferably along the longitudinal edge of the glazing, in particular a windshield, the antireflective coating is spaced from the masking layer or at least does not cover it.

13. The vehicle glazing as claimed in one of the preceding claims, **characterized in that** it comprises metal wires, in particular heating wires, on the face Fb side, in particular anchored to the face Fb and preferably absent in said hole.

14. The vehicle glazing as claimed in one of the preceding claims, **characterized in that** it comprises, on the face F2, an athermal, in particular electrically conductive, optionally heating, functional layer, especially a stack comprising silver, which is absent from said traversing hole at least in the central zone and present along the edge of the traversing hole between the face F2 and Fa, the antireflective coating optionally being in contact with the functional layer, in particular on or under the athermal functional layer.

15. The vehicle glazing (100, 200) as claimed in one of the preceding claims, **characterized in that** the lamination interlayer comprises a PVB (3), optionally comprising PVB/functional film such as polymer film with athermal coating/PVB.

16. A device, **characterized in that** it comprises:
- said glazing (100, 200) as claimed in one of the preceding claims
- a system for infrared viewing at said working wavelength, indeed even a multispectral system, in the visible region (7), positioned in the passenger compartment behind said glazing so as to send and/or receive radiation after passing through the first glass sheet at the level of said traversing hole.
